# EUROPÄISCHE PATENTSCHRIFT

(11) **EP 0 588 829 B1**
(45) Veröffentlichungstag und Bekanntmachung des Hinweises auf die Patenterteilung: **10.01.1996**
(21) Anmeldenummer: 92910749.8
(22) Anmeldetag: 22.05.1992
(51) Int. Cl.: F16H 61/16, F16H 61/02

(54) **VERFAHREN ZUR STEUERUNG EINES SELBSTTÄTIG SCHALTENDEN GETRIEBES EINES KRAFTFAHRZEUGS**
PROCESS FOR CONTROLLING A MOTOR VEHICLE AUTOMATIC GEARBOX
PROCEDE POUR LA COMMANDE D'UNE BOITE DE VITESSES AUTOMATIQUE D'UN VEHICULE AUTOMOBILE

(30) Priorität: 21.06.1991 DE 4120566
(43) Veröffentlichungstag der Anmeldung: 30.03.1994
(73) Patentinhaber: Dr.Ing.h.c. F. Porsche Aktiengesellschaft, D-70435 Stuttgart (DE)
(72) Erfinder: SEIDEL, Willi, D-7147 Eberdingen-Hochdorf (DE); PETERSMANN, Joseph, D-7251 Wimsheim (DE)
(86) Internationale Anmeldenummer: EP9201157
(87) Internationale Veröffentlichungsnummer: WO9300534

(56) Entgegenhaltungen:
- EP-A- 0 142 044
- DE-A- 3 615 961
- DE-A- 3 922 040
- DE-A- 3 922 051
- US-A- 5 097 725

## Beschreibung

Die Erfindung betrifft ein Verfahren nach der Gattung des Hauptanspruchs, wies es aus der DE-A-3 922 040 bekannt ist. Übliche automatische Getriebesteuerungen von mit Brennkraftmaschinen angetriebenen Kraftfahrzeugen leiten beim Zurücknehmen des Fahrpedals in der Regel eine Hochschaltung (Verkleinerung der Übersetzung) ein. Bei Kurvenfahrten oder beim Bremsen ist dies jedoch nicht immer erwünscht, da derartige Lastwechsel u. U. zu unsicheren Fahrzuständen führen können oder beim Wiederbeschleunigen des Kraftfahrzeuges durch verstärktes Gasgeben eine oder mehrere Rückschaltungen erzwungen werden müssen.

Aus der DE-C-3 341 652 ist es in diesem Zusammenhang bekannt geworden, diese Hochschaltungen in Kurven durch Erfassen der Querbeschleunigung des Kraftfahrzeuges zu vermeiden. Hierdurch kann jedoch lediglich ein Schalten in Kurven vermieden werden.

Um auch bereits beim Heranfahren an Kurven Hochschaltungen gezielt verhindern zu können, wird bei dem Verfahren zur Steuerung eines selbsttätig schaltenden Getriebes nach der DE-A-3 922 040 die Fahrpedaländerungsgeschwindigkeit erfaßt und bei Unterschreiten eines bestimmten (negativen) Grenzwerts ein Signal zur Unterbindung eines Hochschaltvorgangs abgeleitet, sofern Schubbetrieb erkannt wird. Daraufhin werden Hochschaltungen unterbunden, bis wiederum Zugbetrieb auftritt und ein festgelegter Zeitraum verstrichen ist.

In der DE-A-3 922 051 ist zusätzlich vorgesehen, diesen Zeitraum von einem weiteren Parameter (Fahraktivität) abhängig zu machen, der aus einem oder einer Kombination von mehreren Betriebs- bzw. Fahrparametern eines Kraftfahrzeugs abgeleitet wird und einen Fahrstil eines Fahrers oder eine gerade vorherrschende Verkehrssituation bewertet.

Ausgehend von diesem Stand der Technik ist es Aufgabe der Erfindung, ein Verfahren zur Steuerung eines selbsttätig schaltenden Getriebes eines Kraftfahrzeugs zu schaffen, das insbesondere bezüglich des Schaltverhaltens vor Kurven und beim Bremsen weiter verbessert wird.

Die Aufgabe wird erfindungsgemäß durch die kennzeichnenden Merkmale des Anspruchs 1 gelöst. Weitere, die Erfindung ausgestaltende Merkmale sind in den Unteransprüchen enthalten.

Die Vorteile der Erfindung sind in erster Linie darin zu sehen, daß ein Verfahren zur Steuerung eines selbsttätig schaltenden Getriebes eines Kraftfahrzeugs geschaffen ist, bei dem das Schaltverhalten, insbesondere vor Kurven und beim Bremsen weiter verbessert ist.

Durch ein erneutes Verzögern von Hochschaltungen nach Erkennung von Zugbetrieb während eines bestimmten Zeitraumes, innerhalb dessen Hochschaltungen vor Kurven vermieden werden, wird erreicht, daß der Fahrer eines Kraftfahrzeuges, dessen Getriebe mit einer derartigen Steuerung ausgestattet ist, auch vor Kurven nochmals kurzzeitig Gas geben kann, ohne daß die unerwünschten Hochschaltungen durchgeführt werden. Auf diese Weise werden Fehleinschätzungen des Fahrers bezüglich des Heranfahrens bzw. des Heranrollens an Kurven ohne negative Auswirkungen auf das Gesamtfahrverhalten des Fahrzeuges toleriert.

In weiterer Ausgestaltung der Erfindung ist vorgesehen, daß nach Ende der Hochschaltverhinderung große Gangsprünge über mehrere Gangstufen vermieden werden, indem diese Gangstufen stufenweise unter Zwischenschaltung bestimmter weiterer Zeiträume durchgeführt werden.

Ebenso können beim Abbremsen des Kraftfahrzeugs bei Vorliegen bestimmter Bedingungen selbsttätig Rückschaltungen (Vergrößerung der Übersetzung) durchgeführt werden; die Einhaltung der Bedingungen gewährleistet dabei einen sicheren Betrieb des Kraftfahrzeugs. So wird insbesondere überwacht, daB die Querbeschleunigung nicht zu hoch ist, das Fahrzeug nicht zu stark verzögert und die Fahrgeschwindigkeit nicht zu hoch ist, um einen Verlust insbesondere der Längs- und Seitenführungskräfte der Räder des Kraftfahrzeugs zu vermeiden.

Das sich nach einer Rückschaltung verstärkt auf die Antriebsräder auswirkende Bremsmoment der Antriebs- (Brennkraft-) Maschine kann sich daher nicht negativ auf das Fahrverhalten des Kraftfahrzeugs auswirken. Die Rückschaltung erfolgt hierbei stufenweise, jeweils unter Zwischenschaltung eines bestimmten Zeitraums.

Das Rückschalten beim Bremsen wird vorzugsweise dann eingeleitet, wenn ein Zustand einer Hochschaltverhinderung aktiv ist. Dieser wird in bekannter Weise aktiviert, wenn das Kraftfahrzeug an eine Kurve heranfährt und der Fahrer das Fahrpedal nicht mehr betätigt.

Durch die Rückschaltungen beim Bremsen wird einerseits die Bremswirkung der Antriebsmaschine des Kraftfahrzeugs im Schubbetrieb verstärkt, so daß die Bremse (Betriebsbremse) des Kraftfahrzeugs entlastet wird. Andererseits wird im Zusammenhang mit einer Gangfesthaltung vor, in und nach Kurven erreicht, daß dem Fahrer nach Durchfahren einer Kurve immer die für ein Wiederbeschleunigen des Kraftfahrzeugs optimale Gangstufe zur Verfügung steht.

Die Erfindung wird nachstehend anhand der in den Zeichnungen dargestellten Ausführungsformen erläutert.

Es zeigt:
- Fig. 1: ein Blockschaltbild einer elektro-hydraulischen Steuerung eines selbsttätig schaltenden Getriebes eines Kraftfahrzeuges,
- Fig. 2: eine Grenzkennlinie zur Erkennung von Zug-/Schubbetrieb,
- Fig. 3: ein Kennfeld für einen motordrehzahl- und gangstufenabhängigen Kennfeldwert,
- Fig. 4: eine erste und eine zweite Grenzkennlinie für eine Querbeschleunigung,
- Fig. 5: ein Kennfeld für einen gangstufen- und fahraktivitätsabhängigen Faktor,
- Fig. 6: eine Kennlinie, die die Abhängigkeit von Zeiträumen in Abhängigkeit von einer Fahraktivität zeigt.

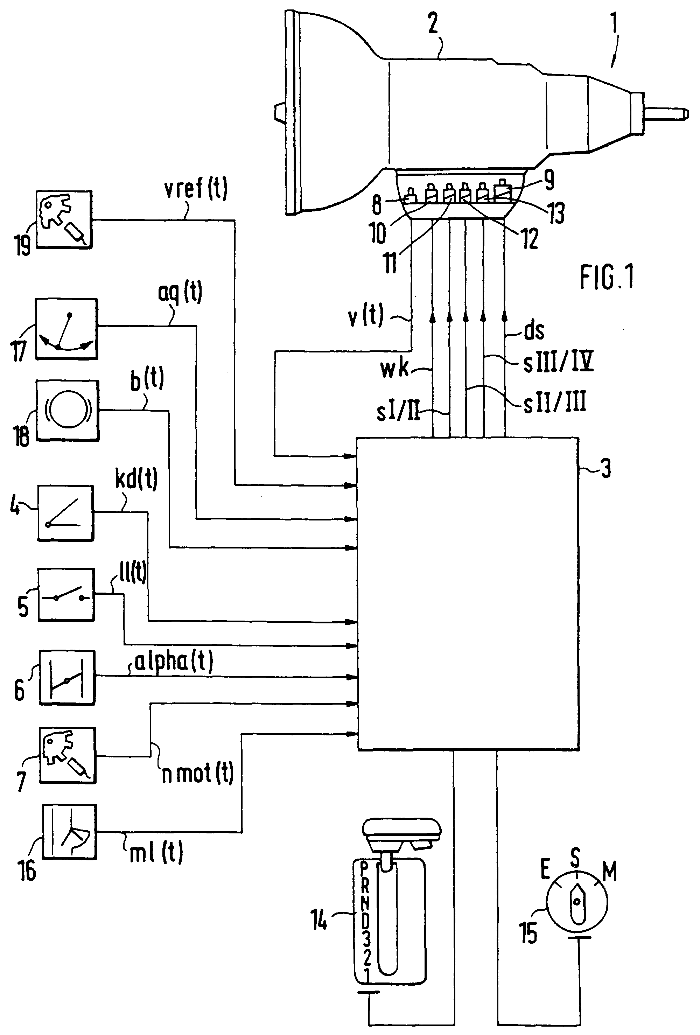

In **Fig. 1** ist mit 1 eine elektro-hydraulische Steuerung eines selbsttätig schaltenden Kraftfahrzeuggetriebes 2 gezeigt, wie sie beispielsweise in Bosch "Technische Berichte", 7(1983)4, auf den Seiten 160 bis 166 und in der ATZ 85(1983)6 auf den Seiten 401 bis 405 beschrieben ist.

Nachfolgend sind Signale oder Größen, die sich mit der Zeit t ändern, als Funktionen der Zeit f(t) dargestellt.

Ein Steuergerät 3 steuert in Abhängigkeit von einem Kick-Down-Signal kd(t) eines Kick-Down-Gebers 4 am Fahrpedal des Kraftfahrzeuges sowie einem Leerlaufsignal 11(t) eines Drosselklappenschalters 5, einer Drosselklappenstellung alpha(t) eines Drosselklappenwinkelgebers 6 (oder eines hierzu äquivalenten Stellungsgebers für die Stellung eines die Leistung der Antriebsmaschine des Kraftfahrzeugs beeinflussenden Organs, wie zum Beispiel einem Fahrpedal oder einem Einspritzpumpenhebel einer selbstzündenden Dieselbrennkraftmaschine), einer Motordrehzahl nmot(t) eines Motordrehzahlgebers 7 einer nicht gezeigten Brennkraftmaschine und einer Fahrgeschwindigkeit v(t) (Getriebeausgangsdrehzahl) eines Getriebeausgangsdrehzahlgebers 8
- einen Druckregler 9 für den Druck eines Hydraulikfluids (Signalausgang ds),
- ein erstes Elektromagnetventil 10 zur Steuerung eines Wandlers bzw. einer Wandlerüberbrückungskupplung (Signalausgang wk),
- ein zweites Elektromagnetventil 11 zur Steuerung eines Gangstufenwechsels zwischen den Gangstufen I und II (Signalausgang sI/II),
- ein drittes Elektromagnetventil 12 zur Steuerung des Gangstufenwechsels zwischen den Gangstufen II und III (Signalausgang sII/III) und
- ein viertes Elektromagnetventil 13 zur Steuerung des Gangstufenwechsels zwischen den Gangstufen III/IV (Signalausgang sIII/IV).

Die Steuerung ist hierbei üblicherweise vom Fahrzeugführer über einen Wählhebel 14 zur Vorwahl von Fahrstufen P, R, N, D, 3, 2, 1 beeinflußbar. Hiermit sind die Fahrstufen P (Parksperre), R (Rückwärtsgangstufe), N (Leergangstufe), D (selbsttätige Schaltung aller vier Gangstufen IV, III, II, I), 3 (selbsttätige Schaltung der drei untersten Gangstufen III, II, I), 2 (selbsttätige Schaltung der Gangstufen II und I) und 1 (Festlegung der ersten Gangstufe I) anwendbar.

Bei dem oben beschriebenen Getriebe ist ferner ein Programmwählschalter 15 vorgesehen, mit dem wenigstens zwei Schaltprogramme (verbrauchsoptimiertes Schaltprogramm "E" (SKF1), leistungsoptimiertes Schaltprogramm "S", (SKF5), Manuellprogramm "M" zur direkten Vorwahl der vier Gangstufen IV, III, II, I über die Wählhebelstellungen D, 3, 2, 1) bzw. zwei Schaltkennfelder SKFj, nach denen die vier Gangstufen in den Fahrstufen D, III und II selbsttätig geschaltet werden, manuell anwählbar sind.

Alternativ zum Programmwählschalter 15 kann auch im Steuergerät 3 ein Steuerverfahren implementiert sein, das beispielsweise entsprechend der DE- 33 48 652 C2 oder der DE- 39 22 051 A1 den Fahrstil eines Fahrers oder dessen verkehrssituationsbedingtes Handeln im Bezug auf die Steuerung des Kraftfahrzeugs längerfristig bewertet und eine Fahraktivität SK(t) (Fahrpedalaktivität) aus einer oder mehreren Betriebs- bzw. Fahrparametern ableitet. Auf der Basis dieser Fahraktivität SK(t) kann dann, entsprechend einer Schaltstellung des Programmwählschalters 15, eines von mehreren Schaltprogrammen bzw. Schaltkennfeldern SKFj zur Schaltung der Gangstufen IV, III, II und I herangezogen werden.

Zur Durchführung des Verfahrens sind neben den Gebern 4 bis 7 noch weitere Geber, wie z. B. ein Luftmengen- bzw. Luftmassenmesser 16, der eine der Brennkraftmaschine zugeführte Luftmenge bzw. eine Luftmasse ml(t) erfaßt sowie ein Querbeschleunigungsgeber 17 (Querbeschleunigung aq(t)) und ein Bremssignalgeber 18 (Bremssignal b(t)) erforderlich, sowie ein Referenzsignalgeber 19, der die Geschwindigkeit der Räder einer nicht angetriebenen Achse erfaßt oder auf andere bekannte Weise die wahre Geschwindigkeit des Fahrzeugs relativ zur befahrenen Fahrbahn nachbildet (Referenzgeschwindigkeit vref(t)).

Es ist insbesondere wünschenswert, daß eine Hochschaltung eines derartigen Getriebes vermieden wird, wenn das Fahrzeug sich beispielsweise einer Kurve nähert und der Fahrer vom Fahrpedal geht.

Wie schon in der DE- 39 22 040 A1 und der DE- 39 22 051 A1 gezeigt, kann eine derartige Kurvenerkennung stattfinden, indem man die zeitliche Änderung der Drosselklappenstellung dalpha(t)/dt abtastet. Gewöhnlich nimmt nämlich ein Fahrer vor einer Kurve das Fahrpedal und hiermit in der Regel auch die Drosselklappe - schneller zurück als er es unter normalen Umständen tut, um beispielsweise die Fahrgeschwindigkeit v(t) zu reduzieren.

Eine bei Zurücknahme der Fahrpedalstellung bzw. bei unbetätigtem Fahrpedal von üblichen Getriebesteuerungen von Stufengetrieben vorgenommene Hochschaltung wird nach dem Verfahren verhindert, solange der Zustand einer Hochschaltverhinderung hsv aktiv ist, hsv =1, wobei der Zustand der Hochschaltverhinderung in den aktiven Zustand übergeht, hsv=1, wenn eine zeitliche Änderung dalpha(t)/dt der Drosselklappenstellung alpha(t) einen negativen Grenzwert -alphag unterschreitet und Schubbetrieb erkannt wird. Der Zustand der Hochschaltverhinderung hsv geht, sobald Zugbetrieb erkannt wird, nach Ablauf eines ersten Zeitraums T1(SK(t)) in den inaktiven Zustand über: hsv=0.

Bei den Begriffen Zugbetrieb und Schubbetrieb kommt es auf das betrachtete System an. Hierbei kann unterschieden werden:
- Gesamtsystem Kraftfahrzeug: Unter Zugbetrieb ist die Beschleunigung des Kraftfahrzeuges (zeitliche Änderung der Fahrgeschwindigkeit) dv(t)/dt>0 zu verstehen, während der Schubbetrieb einer Verzögerung des Kraftfahrzeugs entspricht dv(t)/dt<0.
- System Kupplung (Drehmomentwandler) / Getriebe: Bei Zugbetrieb ist die Eingangsdrehzahl der Kupplung (des Drehmomentwandlers) größer als dessen Ausgangsdrehzahl / das Getriebe gegensinnig verspannt, während bei Schubbetrieb die Eingangsdrehzahl kleiner als die Ausgangsdrehzahl / das Getriebe gleichsinnig verspannt ist.
- System Brennkraftmaschine: Zugbetrieb bedeutet Drosselklappenstellung alpha(t)>0 und zeitliche Änderung der Motordrehzahl dnmot(t)/dt>0, während im Schubbetrieb die Drosselklappenstellung alpha(t)=0 oder die zeitliche Änderung der Motordrehzahl dnmot(t)/dt<0 ist.

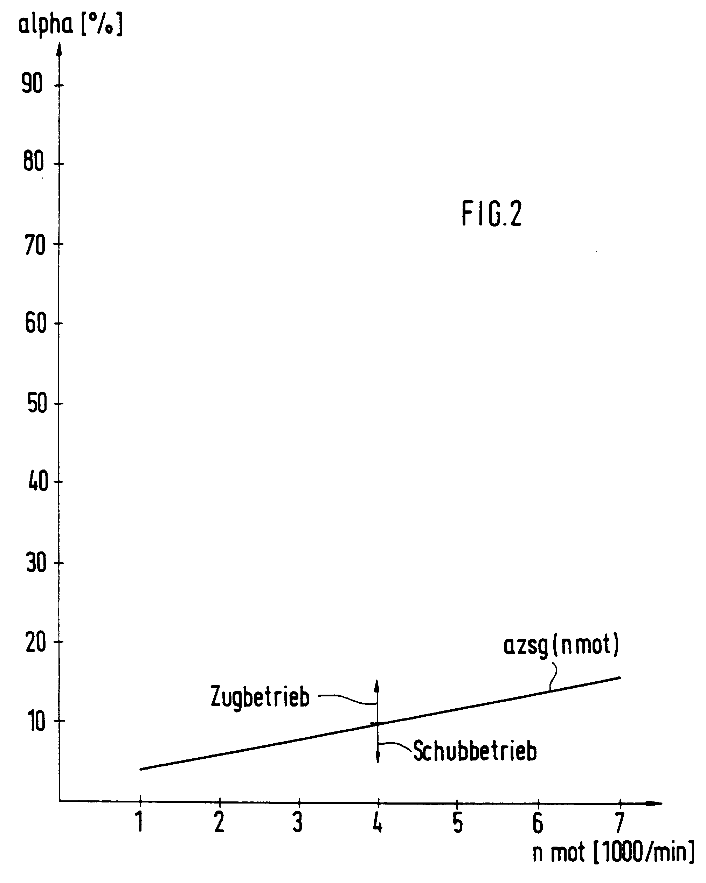

Bezüglich der Getriebesteuerung und damit auch dem Gesamtverhalten des Kraftfahrzeugs hat es sich als sinnvoll erwiesen, die Begriffe Zugbetrieb und Schubbetrieb folgendermaßen nachzubilden:
- Schubbetrieb wird erkannt, wenn die Drosselklappenstellung alpha(t) unter eine motordrehzahlabhängige Grenzkennlinie azsg(nmot), wie sie in **Fig. 2** gezeigt ist, fällt:
   alpha(t)<azsg(nmot).
- Zugbetrieb wird erkannt, wenn sowohl die Drosselklappenstellung alpha(t) die motordrehzahlabhängige Grenzkennlinie azsg(nmot) nach **Fig. 2** überschreitet, als auch die zeitliche Änderung der Fahrgeschwindigkeit dv(t)/dt positive Werte annimmt:
   (alpha(t)>azsg(nmot) ∩ dv(t)/dt>0).

Auf die so festgelegten Begriffe für Zug- und Schubbetrieb wird in der gesamten Patentanmeldung Bezug genommen.

Entsprechend der Erfindung verharrt nun die Hochschaltverhinderung hsv auf dem aktiven Zustand, hsv=1, sofern während des Ablaufs des ersten Zeitraums erneut Schubbetrieb erkannt wird; die Hochschaltverhinderung hsv=1 bleibt hierbei solange aktiv, bis wiederum Zugbetrieb erkannt wird und ein Zeitraum T2(SK(t)) erneut verstrichen ist.

In weiterer Ausgestaltung der Erfindung erfolgt die nach Ablauf des ersten oder zweiten Zeitraums T1(SK(t)), T2(SK(t)) eingeleitete Hochschaltung stufenweise bis zu derjenigen Gangstufe g, die beim augenblicklichen Betriebspunkt im augenblicklich eingestellten Schaltkennfeld vorgesehen ist. Hierdurch wird erreicht, daß die Getriebesteuerung nach Ablauf der Hochschaltverhinderung nicht schlagartig um bis zu 3 Gangstufen (bei vierstufigen Getrieben) hochschaltet.

Die stufenweise Hochschaltung erfolgt jeweils um eine Gangstufe, wobei zwischen zwei Schaltungen wenigstens ein dritter Zeitraum T3(SK(t)) liegt.

Ferner kann es auch vorgesehen sein, daß - vorzugsweise aus der aktiven Hochschaltung hsv=1 heraus - beim Bremsen stufenweise Rückschaltungen ermöglicht werden. Die stufenweise Rückschaltung erfolgt jedoch nur dann, wenn sowohl
- eine Betriebsbremse des Kraftfahrzeugs betätigt ist, Bremssignal b(t)=1, oder alternativ dazu oder ergänzend die zeitliche Änderung der Fahrgeschwindigkeit dv(t)/dt kleiner als ein erster negativer Längsbeschleunigungs- Grenzwert albg(g, nmot, t), albg(g, nmot, t)<0 ist: dv(t)/dt<albg(g, nmot, t),
   als auch
- die mittels des Querbeschleunigungssensors 17 erfaßte Querbeschleunigung aq(t) unterhalb einer ersten bestimmten fahrgeschwindigkeitsabhängigen Querbeschleunigungs- Grenzlinie aqgl(v(t)) liegt:
   aq(t)<aqgl(v(t)),
   als auch
- die zeitliche Änderung der Fahrgeschwindigkeit dv(t)/dt größer als ein zweiter negativer Längsbeschleunigungs-Grenzwert
   albbg(nmot, g, SK(t), t)=k(g-1, SK(t))∗dv/dt|_{g-1} ist:
   dv(t)/dt>albbg(nmot, g, SK(t), t); dv(t)/dt>k(g-1, SK(t))∗dv/dt|_{g-1},
   als auch
- die Fahrgeschwindigkeit v(t) kleiner als ein zweiter Fahrgeschwindigkeits-Grenzwert vg(g, SK(t), t) ist:
   v(t)<vg(g, SK(t), t).

Die Rückschaltung erfolgt um jeweils eine Gangstufe, wobei zwischen zwei Schaltungen wenigstens ein vierter Zeitraum T4(SK(t)) liegt. Die stufenweise Rückschaltung wird bis zu derjenigen Gangstufe g durchgeführt, die beim augenblicklichen Betriebspunkt des Kraftfahrzeugs im augenblicklich eingestellten Schaltkennfeld (SKFj) zulässig ist (zum Vermeiden von Überdrehzahlen der Brennkraftmaschine).

Der erste negative Längsbeschleunigungs- Grenzwert albg(g, nmot, t) ist von den augenblicklichen Werten der eingelegten Gangstufe g und der Motordrehzahl nmot(t) abhängig und entspricht hierbei der jeweiligen (negativen) Längsbeschleunigung dv/dt (und damit der Verzögerung) des in definiertem Zustand (Beladung, Reifenluftdruck, Umweltbedingungen usw.) auf ebener Fahrbahn rollenden Kraftfahrzeugs bei geschlossener Drosselklappe alpha=0, bei den jeweiligen Wertepaaren der augenblicklich eingelegten Gangstufe g und der Motordrehzahl nmot(t).

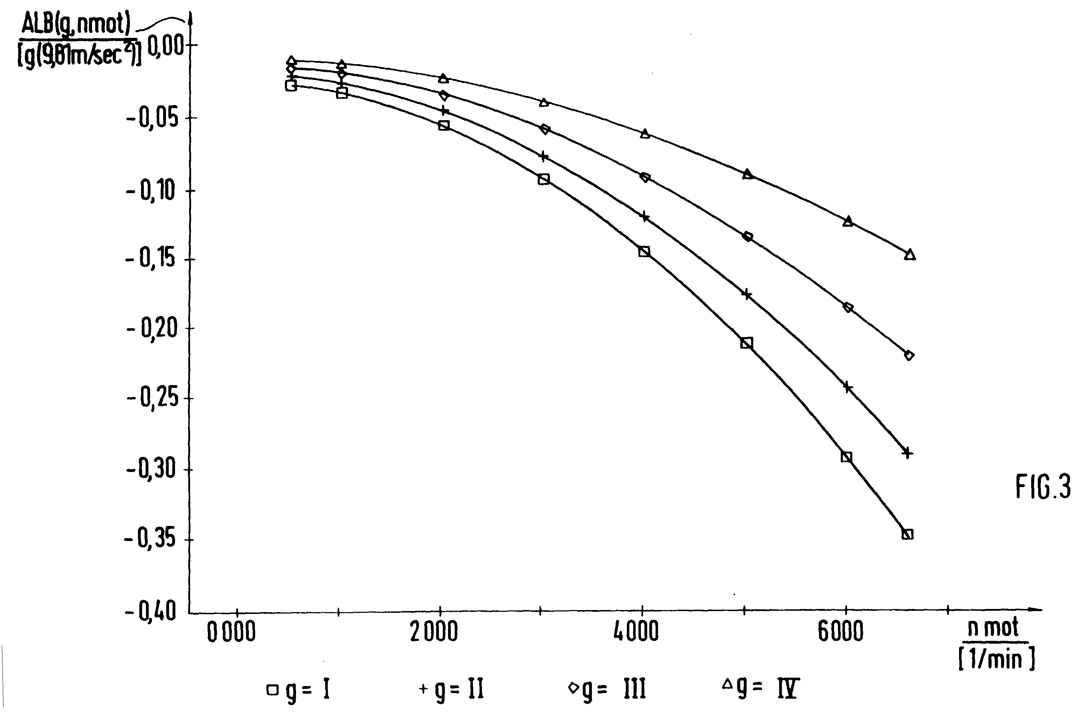

Der erste negative Längsbeschleunigungs- Grenzwert albg(g, nmot, t) wird aus den Augenblickswerten dieser Größen bevorzugt über ein erstes Kennfeld ALB(g, nmot) ermittelt: albg(g, nmot, t)-ALB(g, nmot). Ein Beispiel für ein derartiges erstes Kennfeld ALB(g, nmot) ist in **Fig. 3** abgebildet. Alternativ hierzu kann selbstverständlich die Ermittlung der Längsbeschleunigungs-Grenzwerte albg(g, nmot, t) auch über einen entsprechenden funktionellen Zusammenhang erfolgen.

Die Kennlinien nach **Fig. 3** zeigen deutlich die Abhängigkeit der Verzögerungswerte eines Kraftfahrzeugs mit Brennkraftmaschine von der Gangstufe g und der Motordrehzahl nmot(t). Die einzelnen Kennlinien für die - ohne Beschränkung der Allgemeinheit - vier Gangstufen I, II, III, IV weisen hierbei einem auf der horizontalen Achse aufgetragenen Wert der Motordrehzahl nmot (in Umdrehungen pro Minute) jeweils einen auf der vertikalen Achse aufgetragenen bestimmten Wert ALB in der Einheit g=9,81... Meter pro Sekunde (Erdbeschleunigung) zu.

Für wachsende Werte der Motordrehzahl nmot(t) werden die Verzögerungswerte größer durch die sich verstärkende Motorbremswirkung und den sich erhöhenden Rollwiderstand (Luftwiderstand) des Fahrzeugs. Ebenso steigen die Verzögerungswerte mit kleiner werdender Gangstufe g, da sich das Bremsmoment der Brennkraftmaschine aufgrund der höheren Übersetzung verstärkt auf die Verzögerungsrate des Kraftfahrzeugs auswirkt.

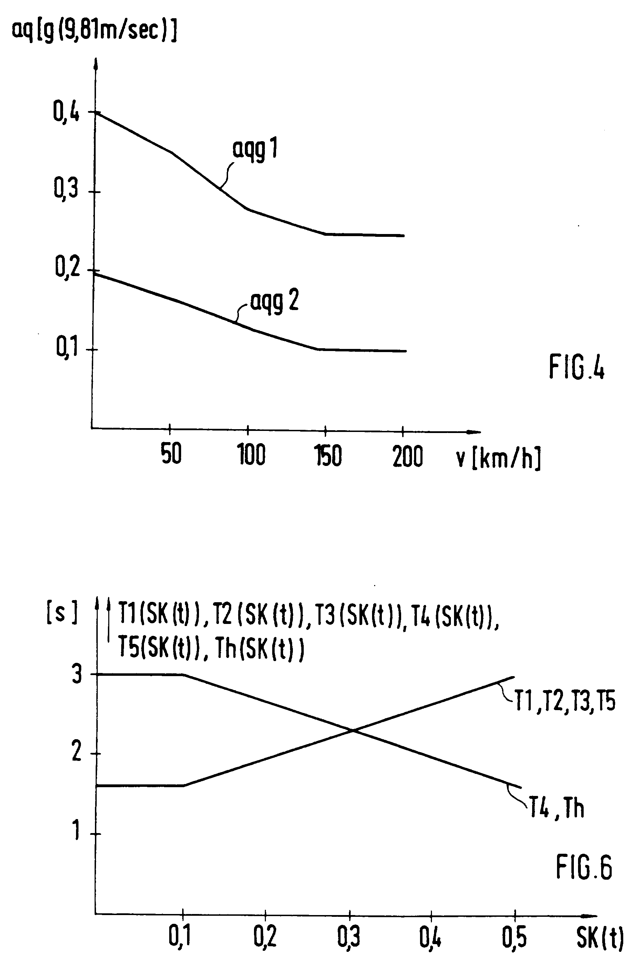

Die erste Querbeschleunigungs- Grenzlinie aqgl(v(t)) ist hierbei vorzugsweise fahrgeschwindigkeitsabhängig und die entsprechenden daraus abgeleiteten Grenzwerte werden mit steigender Fahrgeschwindigkeit v(t) reduziert. Eine entsprechende Kennlinie ist in **Fig. 4** dargestellt.

Der zweite negative Längsbeschleunigungs- Grenzwert albbg(nmot, g, SK(t))= =k(g-1, SK(t))∗dv/dtl_{g-1} wird gemäß einem Produkt aus einem gangstufenabhängigen Faktor k(g-1, SK(t)) und einem bei den augenblicklichen Betriebsbedingungen des Kraftfahrzeugs errechneten Wert der in der nächstniedrigen Gangstufe g-1 zu erwartenden Längsbeschleunigung dv/dtl_{g-1} ermittelt.

Zur Ermittlung dieser in der nächstniedrigen Gangstufe g-1 zu erwartenden Längsbeschleunigung dv/dt|_{g-1} wird zunächst der Wert der augenblicklichen Fahrgeschwindigkeit v(t) herangezogen, aus dem die in der nächstniedrigen Gangstufe g-1 zu erwartende Motordrehzahl nmot(t)|_{g-1}=i(g-1)∗v(t) ermittelt wird. Hierzu wird das Produkt aus dem augenblicklichen Wert der Fahrgeschwindigkeit v(t) und dem Wert der Getriebeübersetzung i(g-1) in der nächstniedrigen Gangstufe g-1 gebildet.

Der Wert der in der nächstniedrigen Gangstufe g-1 zu erwartenden Längsbeschleunigung dv/dtl_{g-1} wird schließlich über das Kennfeld ALB(g, nmot) aus der nächstniedrigen Gangstufe g-1 und dem in der nächstniedrigen Gangstufe zu erwartenden Wert der Motordrehzahl nmot(t)l_{g-1} bestimmt.

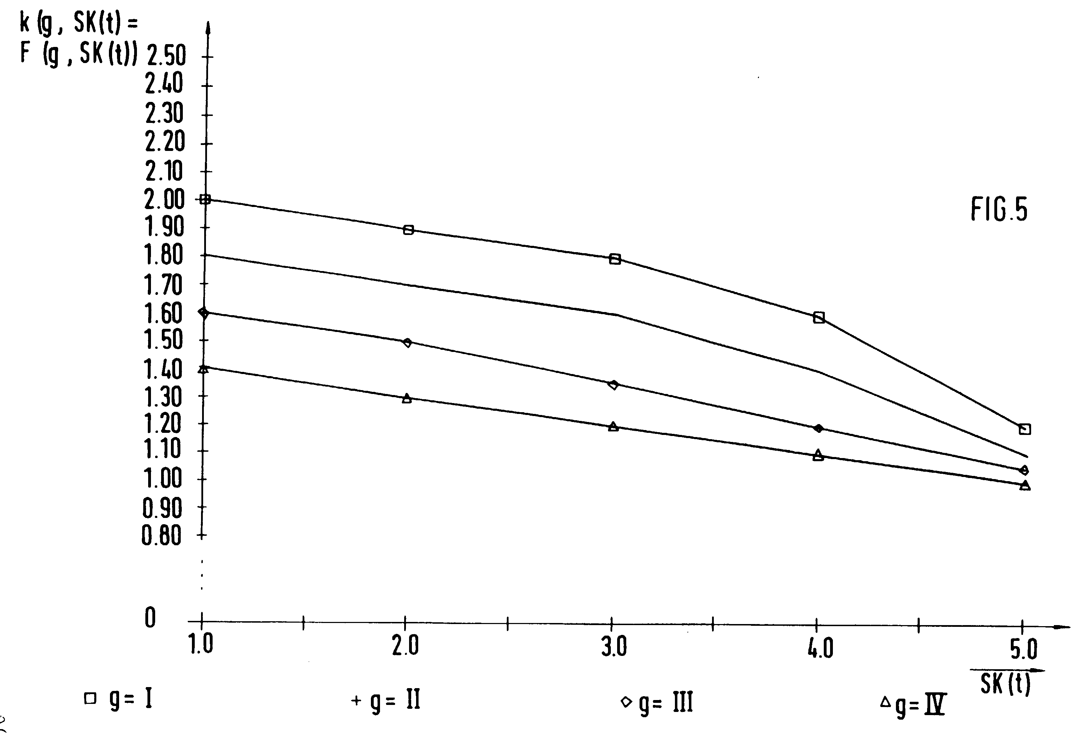

Der gangstufenabhängige Faktor k(g-1, SK(t)) wird über ein zweites Kennfeld F(g, SK(t)) aus der nächstniedrigen Gangstufe (g-1) ermittelt k(g-1, SK(t))=F(g, SK(t)). Ein Beispiel für das zweite Kennfeld ist der **Fig. 5** zu entnehmen.

Der zweite Fahrgeschwindigkeits- Grenzwert vg(g, SK(t), t) hängt von der Gangstufe g und der Fahraktivität SK(t) ab.

Die Wirkung der einzelnen Verfahrensschritte erklärt sich wie folgt:
- Durch Überwachen der Betätigung der Betriebsbremse des Kraftfahrzeugs (Bremssignal b=1), oder alternativ oder ergänzend hierzu, durch prüfen, ob die zeitliche Änderung der Fahrgeschwindigkeit dv(t)/dt unterhalb des ersten negativen Längsbeschleunigungs- Grenzwerts albg(g, nmot) liegt, dv(t)/dt<albg(g, nmot), wird der Fahrerwunsch nach verstärktem Verzögern des Fahrzeugs beziehungsweise nach Rückschaltung abgeleitet.
- Durch Prüfen, ob die Querbeschleunigung aq(t) unterhalb der ersten bestimmten Querbeschleunigungs- Grenzlinie aqgl(v(t)) liegt, wird überwacht, ob das Fahrzeug nicht bereits eine Kurve bei relativ hoher Querbeschleunigung aq(t) befährt. Liegt eine derartige Kurvenfahrt vor, so wird die Rückschaltung unterbunden, damit nicht durch die sich sonst erhöhende Bremswirkung der Kraftschluß zwischen Rad und Fahrbahn verloren geht.
- Eine vergleichbare Sicherheitsfunktion stellt die Überwachung des Unterschreitens des zweiten negativen Längsbeschleunigungs- Grenzwerts albbg(nmot, g, SK(t)) dar: Hierbei wird ermittelt, ob die zu erwartende Verzögerung des Kraftfahrzeugs nach einer angeforderten Rückschaltung nicht zu einem Überschreiten der Haftreibungsgrenze der Räder führen würde.

Hierzu wird aus der beim augenblicklichen Fahrzustand nach Rückschaltung zu erwartenden Verzögerung durch Gewichtung (Multiplikation) mit dem gangstufenabhängigen Faktor k(g-1, SK(t)) eine augenblicklich maximal zulässige Verzögerung ermittelt und diese mit der augenblicklichen Fahrzeugverzögerung dv(t)/dt verglichen; ist die augenblickliche Verzögerung höher, wird eine Rückschaltung unterbunden.

Der gangstufenabhängige Faktor k(g-1, SK(t)) berücksichtigt hierbei, daß der zweite negative Längsbeschleunigungs- Grenzwert albbg kleiner als der erste negative Längsbeschleunigungs- Grenzwert albg(g, nmot), also betragsmäßig größer (entsprechend einer höheren Verzögerungsrate) sein muß.
- Mit der Überwachung des Überschreitens des gangstufenabhängigen Fahrgeschwindigkeits- Grenzwerts vg(g, SK(t), t) können weitere Sicherheitskriterien bezüglich einer Rückschaltung bei zu hoher Fahrgeschwindigkeit oder das Verhindern des Überschreitens von Drehzahlgrenzen der antreibenden Brennkraftmaschine nach Rückschalten erfüllt werden. Diese Sicherheitskriterien sind stark fahrzeugspezifisch und müssen daher individuell an jedes Fahrzeug angepaßt werden, so daß sich die Darstellung eines entsprechenden Kennfelds erübrigt.

Um auch nach dem Heranfahren an Kurven oder dem Anbremsen vor Kurven einen Wechsel der Gangstufe g während der Kurvenfahrt zu vermeiden, wird die Querbeschleunigung aq(t) des Fahrzeugs überwacht. Der Wechsel der Gangstufe g wird vermieden oder die Zeiträume T1(SK(t)), T2(SK(t)), T3(SK(t)) werden zu Null gesetzt, sofern der Betrag der Querbeschleunigung (|aq(t)|) eine von der Fahrgeschwindigkeit v(t) abhängige zweite Querbeschleunigungs-Grenzlinie aqq2=f(v(t)) entsprechend **Fig. 4** überschreitet bzw. solange nach Unterschreiten der zweiten Querbeschleunigungs- Grenzlinie aqg2(v(t)) ein fünfter Zeitraum T5(SK(t)) noch nicht verstrichen ist. Die zweite Querbeschleunigungs- Grenzlinie aqg2(v(t)) zur Kurvenerkennung liegt hierbei ersichtlich deutlich niedriger als die - als Sicherheitsfunktion eingesetzte - erste Querbeschleunigungs- Grenzlinie aqg1(v(t)).

Ferner können noch im Schubbetrieb Gangwechsel, insbesondere jedoch Rückschaltungen vermieden und/oder die Zeiträume T1(SK(t)), T2(SK(t)), T3(SK(t)) oder T5(SK(t)) zu Null gesetzt werden, sofern an wenigstens einem der Räder des Kraftfahrzeugs übermäßiger Radschlupf auftritt oder der Kraftschluß zwischen wenigstens einem Rad des Kraftfahrzeugs und der befahrenen Fahrbahn unterbrochen ist.

Hierbei werden Schaltungen nur dann zugelassen, wenn eine Differenzgeschwindigkeit Dv(t)=vref(t)-v(t) zwischen der Geschwindigkeit vref(t) einer nicht angetriebenen Achse und der an einer angetriebenen Achse erfaßten Fahrgeschwindigkeit v(t) einen zulässigen Differenzgeschwindigkeitswert Dvzul(SK(t)) nicht überschreitet: Dv(t)<Dvzul(SK(t)).

Bei Überschreiten des zulässigen Differenzgeschwindigkeitswerts Dvzul(SK(t)) kann zusätzlich
- eine Wandlerüberbrückungskupplung eines mit einem Drehmomentwandler ausgestatteten Getriebes geöffnet,
- eine Haltezeit Th gesetzt werden, während der eine Hochschaltung nicht unterbunden werden kann,
- die eingelegte Gangstufe g um eins erhöht werden (Hochschaltung) und
- Rückschaltungen verhindert werden,
wobei diese Funktionen wieder zurückgesetzt werden, wenn Zugbetrieb erkannt wird und positive Werte der Änderung der Fahrgeschwindigkeit v(t) vorliegen.

Die Zeiträume T1(SK(t)), T2(SK(t)), T3(SK(t)), T4(SK(t)), T5(SK(t)) und Th(SK(t)) können sowohl von gleicher, als auch unterschiedlicher Zeitdauer sein, und wenigstens einer der Zeiträume oder der Fahrgeschwindigkeits-Grenzwert vg(g, SK(t), t) oder der gangstufenabhängige Faktor k(g-1, SK(t)) oder der zulässige Differenzgeschwindigkeitswert Dvzul(SK(t)) können willkürlich einstellbar sein und vorzugsweise zusammen mit einer Einstellung der Schaltkennfelder SKFj mittels des Programmwählschalters 15 (verbrauchsoptimiertes Schaltkennfeld SKF1, leistungsoptimiertes Schaltkennfeld SKF5) derart eingestellt werden, daß bei mehr leistungsoptimierten Schaltkennfeldern (Fahrprogrammen) die Zeiträume T1(SK(t)), T2(SK(t)), T3(SK(t)), T5(SK(t)) und der Fahrgeschwindigkeits-Grenzwert vg(g, SK(t)) größer und die Zeiträume T4(SK(t)), Th(SK(t)), der gangstufenabhängige Faktor k(g-1, SK(t)) und der zuilässige Differenzgeschwindigkeitswert Dvzul(SK(t)) kleiner werden (siehe **Fig. 5** bzw. **Fig. 6**).

Sieht die Getriebesteuerung eine selbsttätige Anpassung der Schaltkennfelder an den Fahrstil des Fahrers oder eine Verkehrssituation vor, so können wenigstens einer der Zeiträume T1(SK(t)), T2(SK(t)), T3(SK(t)), T4(SK(t)), T5(SK(t)) oder Th(SK(t)) oder wenigstens der Fahrgeschwindigkeits- Grenzwert vg(g, SK(t)) oder der gangstufenabhängige Faktor k(g-1, SK(t)) oder der zulässige Differenzgeschwindigkeitswert Dvzul(SK(t)) von der den Fahrstil des Fahrers oder die Verkehrssituation bewertenden Fahraktivität SK(t)) abhängig sein. Mit wachsender, mehr leistungsorientierter Fahraktivität SK(t) werden die Zeiträume T1(SK(t)), T2(SK(t)), T3(SK(t)), T5(SK(t)) und der Fahrgeschwindigkeits- Grenzwert vg(g, SK(t)) größer und die Zeiträume T4(SK(t)), Th(SK(t)), der gangstufenabhängige Faktor k(g-1, SK(t)) und der zulässige Differenzgeschwindigkeitswert Dvzul(SK(t)) kleiner (siehe **Fig. 5** **bzw. Fig. 6**).

Die Fahraktivität SK(t) wird durch eine den Fahrstil des Fahrers oder dessen verkehrsituationsbedingtes Handeln im Bezug auf die Steuerung des Kraftfahrzeugs längerfristig bewertenden, funktionellen Zusammenhang (gleitende Mittelwertbildung aus aktuellen und vergangenen Werten einer einzigen Betriebskenngröße) oder einer zu einer einzigen aus mehreren Betriebskenngrößen eines Kraftfahrzeugs zusammengesetzten Größe ermittelt. Dies kann beispielsweise analog zu der in der DE- 39 22 051 A1 oder der DE- 33 41 652 C2 gezeigten Weise geschehen.

## Patentansprüche

1. Verfahren zur Steuerung eines selbsttätig schaltenden Getriebes (2), das vorzugsweise elektrohydraulisch betätigt wird, eines Kraftfahrzeugs, dessen als Brennkraftmaschine (4) ausgeführter Motor mittels eines Leistungssteuerorgans, vorzugsweise in Form eines Fahrpedals oder einer Drosselklappe, beeinflußbar ist, wobei Gangstufen (g) des Getriebes (2) mittelbar über Schaltkennfelder (SKFj) wenigstens in Abhängigkeit von der Stellung des Leistungssteuerorganes (alpha(t)), der Fahrgeschwindigkeit (v(t)) und der Motordrehzahl (nmot(t)) selbsttätig geschaltet werden, wobei Hochschaltungen (Verkleinerung der Übersetzung) verhindert werden, wenn eine zeitliche Änderung der Stellung des Leistungssteuerorgans (dalpha(t)/dt) einen negativen Grenzwert (-alphag) unterschreitet und wenn Schubbetrieb erkannt wird, und wobei die Hochschaltungen dann solange verhindert werden, bis nach Ablauf eines ersten Zeitraums (T1(SK(t))), der mit der Verhinderung der Hochschaltung beginnt, Zugbetrieb erkannt wird, **dadurch gekennzeichnet,** daß für den Fall, daß während des Ablaufs des ersten Zeitraumes erneut Schubbetrieb erkannt wird, Hochschaltungen weiterhin verhindert werden, bis wiederum Zugbetrieb erkannt wird und ein zweiter Zeitraum verstrichen ist.

2. Verfahren nach Anspruch 1, **dadurch gekennzeichnet,** daß die nach Ablauf des ersten Zeitraums (T1(SK(t))) oder zweiten Zeitraums (T2(SK(t))) eingeleitete Hochschaltung stufenweise bis zu derjenigen Gangstufe (g) erfolgt, die beim augenblicklichen Betriebspunkt im augenblicklich eingestellten Schaltkennfeld (SKFj) vorgesehen ist.

3. Verfahren nach Anspruch 2, **dadurch gekennzeichnet,** daß die Hochschaltung um jeweils eine Gangstufe erfolgt und zwischen zwei Schaltungen wenigstens ein dritter Zeitraum (T3(SK(t))) liegt.

4. Verfahren nach wenigstens einem der vorangehenden Ansprüche 1, 2 oder 3, **dadurch gekennzeichnet,** daß bei aktiver Hochschaltverhinderung eine stufenweise Rückschaltung (Vergrößerung der Übersetzung) erfolgt, wenn sowohl
- eine Betriebsbremse des Kraftfahrzeugs betätigt ist (Bremssignal b(t)=1) oder alternativ dazu oder ergänzend die zeitliche Änderung der Fahrgeschwindigkeit kleiner als ein erster negativer Längsbeschleunigungs- Grenzwert ist, als auch
- die mittels eines Querbeschleunigungssensors (17) erfaßte Querbeschleunigung unterhalb einer ersten Querbeschleunigungs-Grenzlinie liegt, als auch
- die zeitliche Änderung der Fahrgeschwindigkeit größer als ein zweiter negativer Längsbeschleunigungs- Grenzwert ist, als auch
- die Fahrgeschwindigkeit (v(t)) kleiner als ein Fahrgeschwindigkeits-Grenzwert.

5. Verfahren nach Anspruch 4, **dadurch gekennzeichnet,** daß die Rückschaltung um jeweils eine Gangstufe erfolgt und zwischen zwei Schaltungen wenigstens ein vierter Zeitraum (T4(SK(t))) liegt.

6. Verfahren nach Anspruch 4 oder 5, **dadurch gekennzeichnet,** daß die stufenweise Rückschaltung bis zu derjenigen Gangstufe (g) erfolgt, die beim augenblicklichen Betriebspunkt im augenblicklich eingestellten Schaltkennfeld (SKFj) zulässig ist.

7. Verfahren nach wenigstens einem der vorangehenden Ansprüche 4 bis 6, **dadurch gekennzeichnet,** daß der erste negative Längsbeschleunigungs-Grenzwert von den augenblicklichen Werten der eingelegten Gangstufe (g) und der Motordrehzahl (nmot(t)) abhängig ist und der Längsbeschleunigung des in definiertem Zustand auf ebener Fahrbahn rollenden Kraftfahrzeugs bei geschlossener Drosselklappe (alpha-0) und bei den jeweiligen Wertepaaren der augenblicklich eingelegten Gangstufe (g) und der Motordrehzahl (nmot(t)) entspricht.

8. Verfahren nach Anspruch 7, **dadurch gekennzeichnet,** daß der erste negative Längsbeschleunigungs- Grenzwert mit den Augenblickswerten der Gangstufe (g) und der Motordrehzahl (nmot(t)) über ein erstes Kennfeld (ALB(g, nmot)) ermittelt wird.

9. Verfahren nach wenigstens einem der Ansprüche 4 bis 8, **dadurch** **gekennzeichnet,** daß der zweite negative Längsbeschleunigungs- Grenzwert gemäß einem Produkt aus einem gangstufenabhängigen Faktor und einem mit dem augenblicklichen Wert der Fahrgeschwindigkeit (v(t)) zu ermittelnden Wert der in der nächstniedrigen Gangstufe (g-1) zu erwartenden Längsbeschleunigung bestimmt wird, in dem die in der nächstniedrigen Gangstufe (g-1) zu erwartende Motordrehzahl aus dem augenblicklichen Wert der Fahrgeschwindigkeit (v(t)) und dem Wert der Getriebeübersetzung (i(g-1)) in der nächstniedrigen Gangstufe (g-1) ermittelt wird und der in der nächstniedrigen Gangstufe (g-1) zu erwartenden Längsbeschleunigung ein Wert zugewiesen wird, der über das erste Kennfeld (ALB(g, nmot)) aus der nächstniedrigen Gangstufe (g-1) und dem ermittelten in der nächstniedrigen Gangstufe (g-1) zu erwartenden Wert der Motordrehzahl bestimmt wird.

10. Verfahren nach Anspruch 9, **dadurch gekennzeichnet,** daß der gangstufenabhängige Faktor über ein zweites Kennfeld aus der nächstniedrigen Gangstufe (g-1) ermittelt wird.

11. Verfahren nach wenigstens einem der Ansprüche 4 bis 10, **dadurch** **gekennzeichnet,** daß der Fahrgeschwindigkeits- Grenzwert wenigstens von der Gangstufe (g) abhängt.

12. Verfahren nach wenigstens einem der vorangehenden Ansprüche, **dadurch** **gekennzeichnet,** daß ein Wechsel der Gangstufe (g) vermieden wird und/oder wenigstens einer der Zeiträume (T1(SK(t)), T2(SK(t)), T3(SK(t))) zu Null gesetzt wird, sofern der Betrag der Querbeschleunigung eine von der Fahrgeschwindigkeit (v(t)) abhängige zweite Querbeschleunigungs-Grenzlinie überschreitet, bzw. solange nach Unterschreiten der zweiten Querbeschleunigungs- Grenzlinie ein fünfter Zeitraum (T5(SK(t))) noch nicht verstrichen ist.

13. Verfahren nach wenigstens einem der vorangehenden Ansprüche, **dadurch** **gekennzeichnet,** daß Rückschaltungen vermieden werden und/oder wenigstens einer der Zeiträume (T1(SK(t)), T2(SK(t)), T3(SK(t)), oder T5(SK(t))) zu Null gesetzt werden, sofern an wenigstens einem der Räder des Kraftfahrzeugs übermäßiger Radschlupf auftritt oder der Kraftschluß zwischen wenigstens einem Rad des Kraftfahrzeugs und der befahrenen Fahrbahn unterbrochen ist.

14. Verfahren nach wenigstens einem der Ansprüche 1 bis 12, dadurch gekennzeichnet, daß eine Rückschaltung nur dann zugelassen wird, wenn eine Differenzgeschwindigkeit zwischen einer Geschwindigkeit einer nicht angetriebenen Achse und der an einer angetriebenen Achse erfaßten Fahrgeschwindigkeit (v(t)) einen zulässigen Differenzgeschwindigkeitswert nicht überschreitet.

15. Verfahren nach Anspruch 14, dadurch gekennzeichnet, daß bei Überschreiten des zulässigen Differenzgeschwindigkeitswerts
- eine Wandlerüberbrückungskupplung eines mit einem Drehmomentwandler ausgestatteten Getriebes geöffnet,
- eine Haltezeit (Th(SK(t))) gesetzt wird, während der eine Hochschaltung nicht unterbunden werden kann,
- die eingelegte Gangstufe (g) um eins erhöht wird und
- Rückschaltungen verhindert werden,
wobei diese Funktionen wieder zurückgesetzt werden, wenn Zugbetrieb erkannt wird und positive Werte der zeitlichen Änderung der Fahrgeschwindigkeit vorliegen.

16. Verfahren nach wenigstens einem der vorangehenden Ansprüche, **dadurch** **gekennzeichnet,** daß wenigstens einer der Zeiträume (T1(SK(t)), T2(SK(t)), T3(SK(t)), T4(SK(t)), T5(SK(t)), Th(SK(t))) oder wenigstens der Fahrgeschwindigkeits- Grenzwert oder der gangstufenabhängige Faktor oder der zulässige Differenzgeschwindigkeitswert willkürlich einstellbar ist bzw. sind und vorzugsweise zusammen mit einer Einstellung der Schaltkennfelder (SKFj) (verbrauchsoptimiertes Fahrprogramm, Schaltkennfeld SKF1; leistungsoptimiertes Fahrprogramm, Schaltkennfeld SKF5) derart eingestellt werden, daß bei mehr leistungoptimierten Fahrprogrammen die Zeiträume (T1(SK(t)), T2(SK(t)), T3(SK(t))), T5(SK(t)) und der Fahrgeschwindigkeits- Grenzwert größer werden, und die Zeiträume (T4(SK(t)), (Th(SK(t))), der gangstufenabhängige Faktor und der zulässige Differenzgeschwindigkeitswert kleiner werden.

17. Verfahren nach wenigstens einem der vorangehenden Ansprüche, **dadurch** **gekennzeichnet,** daß wenigstens einer der Zeiträume (T1(SK(t)), T2(SK(t)), T3(SK(t)), T4(SK(t)), T5(SK(t)), Th(SK(t))) oder wenigstens der Fahrgeschwindigkeits- Grenzwert oder der gangstufenabhängige Faktor oder der zulässige Differenzgeschwindigkeitswert von einer den Fahrstil des Fahrers oder dessen verkehrssituationsbedingtes Handeln im Bezug auf die Steuerung des Kraftfahrzeugs längerfristig bewertenden Fahraktivität abhängig sind und mit wachsender, mehr leistungsorientierter Fahraktivität die Zeiträume (T1(SK(t)), T2(SK(t)), T3(SK(t))), T5(SK(t)) und der Fahrgeschwindigkeits- Grenzwert größer werden, und die Zeiträume (T4(SK(t)), (Th(SK(t))), der gangstufenabhängige Faktor und der zulässige Differenzgeschwindigkeitswert kleiner werden.

18. Verfahren nach Anspruch 17, **dadurch gekennzeichnet,** daß die Fahraktivität durch einen den Fahrstil des Fahrers oder dessen verkehrssituationsbedingtes Handeln im Bezug auf die Steuerung des Kraftfahrzeugs längerfristig bewertenden funktionellen Zusammenhang (gleitende Mittelwertbildung) aus aktuellen und vergangenen Werten einer einzigen Betriebskenngröße oder einer zu einer einzigen aus mehreren Betriebskenngrößen eines Kraftfahrzeugs zusammengesetzten Größe ermittelt wird.

## Claims

1. A method of controlling an automatically changing gear unit (2), which is preferably electrohydraulically operated, of a motor vehicle whereof the engine, which is constructed as an internal combustion engine (4), can be influenced by means of a power control device, preferably in the form of a driving pedal or a throttle valve, gears (g) of the gear unit (2) being changed automatically indirectly by way of switching characteristic fields (SKFj) at least depending on the position of the power control device (alpha(t)), the travelling speed (v(t)) and the engine speed (nmot(t)), changing up (decrease in the gear ratio) being prevented when an alteration of the position of the power control unit (dalpha(t)/dt) over time falls below a negative boundary value (-alphag) and when overrun operation is recognized, and changing up then being prevented until, after the expiry of a first time period (T1(SK(t))) which starts on prevention of changing up, drive operation is recognized, characterized in that where, during the running of the first time period, overrun operation is recognized again, changing up continues to be prevented until drive operation is recognized and a second time period has elapsed.

2. A method according to Claim 1, characterized in that the changing up which begins on expiry of the first time period (T1(SK(t))) or of the second time period (T2(SK(t))) takes place step by step until that gear (g) which is provided at the current operating point in the currently set switching characteristic field (SKFj).

3. A method according to Claim 2, characterized in that the changing up is by one gear in each case and at least a third time period (T3(SK(t))) lies between two changes.

4. A method according to at least one of the preceding Claims 1, 2 or 3, characterized in that, when the prevention of changing up is active, a step-by-step changing back (increase in the gear ratio) takes place when
- an operating brake of the motor vehicle is operated (braking signal b(t) = I) or, as an alternative thereto or in addition, the alteration of the travelling speed over time is less than a first negative longitudinal acceleration boundary value, and
- the transverse acceleration detected by means of a transverse acceleration sensor (17) lies below a first transverse acceleration boundary line, and
- the alteration of the travelling speed over time is greater than a second negative longitudinal acceleration boundary value, and
- the travelling speed (v(t)) is less than a travelling speed boundary value.

5. A method according to Claim 4, characterized in that the changing back is by one gear in each case and at least a fourth time period (T4(SK(t))) lies between two changes.

6. A method according to Claim 4 or 5, characterized in that the step-by-step changing back takes place until that gear (g) which is permissible at the current operating point in the currently set switching characteristic field (SKFj).

7. A method according to at least one of the preceding Claims 4 to 6, characterized in that the first negative longitudinal acceleration boundary value is dependent upon the current values of the selected gear (g) and the engine speed (nmot(t)) and corresponds to the longitudinal acceleration of the motor vehicle moving in a defined state on a planar roadway with the throttle valve closed (alpha = 0) and with the respective pairs of values of the currently selected gear (g) and the engine speed (nmot(t)).

8. A method according to Claim 7, characterized in that the first negative longitudinal acceleration boundary value is determined using the current values of the gear (g) and the engine speed (nmot(t)) by way of a first characteristic field (ALB(g, nmot)).

9. A method according to at least one of Claims 4 to 8, characterized in that the second negative longitudinal acceleration boundary value is determined in accordance with the product of a factor dependent upon the gear and a value, to be determined from the current value of the travelling speed (v(t)), of the longitudinal acceleration to be expected in the next gear down (g-1), by the engine speed to be expected in the next gear down (g-1) being determined from the current value of the travelling speed (v(t)) and the value of the gear ratio (i(g-1)) in the next gear down (g-1) and there is assigned to the longitudinal acceleration to be expected in the next gear down (g-1) a value which is determined by way of the first characteristic field (ALB(g, nmot)) from the next gear down (g-1) and the determined value of the engine speed to be expected in the next gear down (g-1).

10. A method according to Claim 9, characterized in that the factor dependent upon the gear is determined by way of a second characteristic field from the next gear down (g-1).

11. A method according to at least one of Claims 4 to 10, characterized in that the travelling speed boundary value is dependent at least upon the gear (g).

12. A method according to at least one of the preceding claims, characterized in that a change of gear (g) is avoided and/or at least one of the time periods (T1(SK(t)), T2(SK(t)), T3(SK(t))) is set to zero if the amount of the transverse acceleration exceeds a second transverse acceleration boundary line dependent upon the travelling speed (v(t)), or, after falling below the second transverse acceleration boundary line, as long as a fifth time period (T5(SK(t))) has not yet elapsed.

13. A method according to at least one of the preceding claims, characterized in that changing back is avoided and/or at least one of the time periods (T1(SK(t)), T2(SK(t)), T3(SK(t)), or T5(SK(t))) is set to zero if exaggerated wheel slip occurs at at least one of the wheels of the motor vehicle or the frictional contact between at least one wheel of the motor vehicle and the roadway travelled upon is interrupted.

14. A method according to at least one of Claims 1 to 12, characterized in that changing back is only permitted if a differential speed between a speed of a non-driven axle and the travelling speed (v(t)) detected at a driven axle does not exceed a permissible differential speed value.

15. A method according to Claim 14, characterized in that when the permissible differential speed value is exceeded
- a converter bridging clutch of a gear unit equipped with a torque converter is opened,
- a holding time (Th(SK(t))) is set during which changing up cannot be prevented,
- the selected gear (g) is increased by one and
- changing back is prevented,
it being possible to reset these functions again when drive operation is recognized and positive values of the alteration in the travelling speed over time are present.

16. A method according to at least one of the preceding claims, characterized in that at least one of the time periods (T1(SK(t)), T2(SK(t)), T3(SK(t)), T4(SK(t)), T5(SK(t)), Th(SK(t))) or at least one of the travelling speed boundary value or the gear-dependent factor or the permissible differential speed value is or are adjustable at will and are preferably adjusted together with an adjustment of the switching characteristic fields (SKFj) (consumption-optimized driving regime, switching characteristic field SKF1; performance-optimized driving regime, switching characteristic field SKF5) in such a way that in driving regimes which are better optimized in terms of performance the time periods (T1(SK(t)), T2(SK(t)), T3(SK(t)), T5(SK(t))) and the travelling speed boundary value become greater and the time periods (T4(SK(t)), (Th(SK(t))), the gear-dependent factor and the permissible differential speed value become smaller.

17. A method according to at least one of the preceding claims, characterized in that at least one of the time periods (T1(SK(t)), T2(SK(t)), T3(SK(t)), T4(SK(t)), T5(SK(t)), Th(SK(t))) or at least the travelling speed boundary value or the gear-dependent factor or the permissible differential speed value are dependent upon a driving activity which evaluates the driver's driving style or the driver's behaviour in dependence on a traffic situation in relation to the control of the motor vehicle over a longer period, and as the driving activity which is more dependent on performance increases the time periods (T1(SK(t)), T2(SK(t)), T3(SK(t)), T5(SK(t))) and the travelling speed boundary value become greater, and the time periods (T4(SK(t)), Th(SK(t))), the gear-dependent factor and the permissible differential speed value become smaller.

18. A method according to Claim 17, characterized in that the driving activity is determined by a functional relationship (sliding average formation) which evaluates the driver's driving style or the driver's behaviour in dependence on a traffic situation in relation to the control of the motor vehicle over a longer period from current and past values of a single operating characteristic variable or one from a single variable composed of a plurality of operating characteristic variables of a motor vehicle.

## Revendications

1. Procédé de commande d'une boîte de vitesses automatique (2), qui est actionnée de préférence électrohydrauliquement, d'un véhicule automobile, dont le moteur qui est constitué sous forme d'un moteur à combustion interne (4) peut être réglé au moyen d'un organe de commande de puissance, de préférence sous forme d'une pédale ou d'un clapet d'étrangement, les étages de vitesse (g) de la boîte de vitesses (2) étant passés automatiquement et indirectement par des champs caractéristiques de commutation (SKFj) au moins en fonction de la position de l'organe de commande de puissance (alpha(t))_{,} de la vitesse de marche (v(t)) et de la vitesse de rotation du moteur (nmot(t)), des passages à la vitesse supérieure (diminution de la démultiplication) étant inhibés quand une modification dans le temps de la position de l'organe de commande de puissance (dalpha(t)/dt) passe au-dessous d'une valeur limite négative (-alphag) et quand un fonctionnement en poussée est détecté, et les passages à la vitesse supérieure étant inhibés jusquu'à ce que soit détecté un fonctionnement en traction après écoulement d'un premier laps de temps (T1(SK(t)) qui commence avec l'inhibition du passage à la vitesse supérieure, caractérisé en ce que pour le cas où pendant l'écoulement du premier laps de temps est détecté à nouveau un fonctionnement en poussée, les passages à la vitesse supérieure sont à nouveau inhibés jusqu'à ce que le fonctionnement en traction soit à nouveau détecté et qu'un second laps de temps se soit écoulé.

2. Procédé selon la revendication 1, caractérisé en ce que le passage à la vitesse supérieure après écoulement du premier laps de temps (T1(SK(t))) ou du second laps de temps (T2(SK(t))) a lieu par étapes jusqu'à l'étage de vitesse (g) qui est prévu au point de fonctionnement instantané dans le champ caractéristique de changement de vitesse (SKFj) établi instantanément.

3. Procédé selon la revendication 2, caractérisé en ce que le passage à vitesse supérieure a lieu chaque fois d'un étage de vitesse et en ce qu'entre deux changements de vitesse s'écoule au moins un troisième laps de temps (T3(SK(t))).

4. Procédé selon l'une au moins des revendications 1, 2 ou 3, caractérisé en ce que dans le cas d'une inhibition active d'un passage à la vitesse supérieure a lieu une rétrogradation par étapes (augmentation de la démultiplication), quand aussi bien
- un frein du véhicule automobile est actionné (signal de freinage b(t)=1) ou en variante ou en complément la modification dans le temps de la vitesse de marche est plus faible qu'une première valeur limite négative d'accélération longitudinale, que lorsque
- l'accélération transversale détectée par un capteur d'accélération transversale (17) est située au-dessous d'une première limite d'accélération transversale, que lorsque
- la modification dans le temps de la vitesse de marche est supérieure à une seconde valeur limite négative d'accélération longitudinale, et que lorsque
- la vitesse de marche (v(t)) est plus faible qu'une valeur limite de vitesse de marche.

5. Procédé selon la revendication 4, caractérisé en ce que la rétrogradation a lieu chaque fois d'un étage de vitesse et en ce qu'entre deux passages de vitesse est prévu au moins un quatrième laps de temps (T4(SK(t))).

6. Procédé selon la revendication 4 ou 5, caractérisé en ce que la rétrogradation par étapes a lieu jusqu'à l'étage de vitesse (g) qui est admis au point de fonctionnement instantané dans le champ caractéristique de changement de vitesse (SKFj) établi instantanément.

7. Procédé selon l'une au moins des revendications précédentes 4 à 6, caractérisé en ce que la première valeur limite négative de l'accélération longitudinale dépend des valeurs instantanées de l'étage de vitesse (g) qui a été passé et de la vitesse de rotation du moteur (nnot(t)) et correspond a l'accélération longitudinale du véhicule automobile roulant dans un état défini sur une voie plane alors que le clapet d'étranglement est fermé (alpha = 0) et pour les paires de valeurs respectives de l'étage de vitesse (g) établi instantanément et de la vitesse de rotation du moteur (nmot(t)).

8. Procédé selon la revendication 7, caractérisé en ce que la première valeur limite négative de l'accélération longitudinale est déterminée avec les valeurs instantanées de l'étage de vitesse (g) et de la vitesse de rotation du moteur (nmot(t)) par un premier champ caractéristique (ALB(g, nmot).

9. Procédé selon au moins l'une des revendications 4 à 8, caractérisé en ce que la seconde valeur limite négative de l'accélération longitudinale est déterminée par un produit d'un facteur dépendant de l'étage de vitesse et d'une valeur, à déterminer avec la valeur instantanée de la vitesse de marche (v(t)), de l'accélération longitudinale à attendre de l'étage de vitesse (g-1) qui suit en rétrogradant, dans lequel la vitesse de rotation du moteur à attendre pour l'étage de vitesse (g-1) qui suit en rétrogradant est déterminée à partir de la valeur instantanée de la vitesse de marche (v(t)) et de la valeur de la démultiplication de la boîte de vitesses (i(g-1)) de l'étage de vitesse (g-1) qui suit en rétrogradant, et qui assigne au cours de l'étage de vitesse (g-1) qui suit en rétrogradant une valeur pour la vitesse longitudinale à attendre qui est déterminée par le premier champ caractéristique (ALB(g, mot)) à partir de l'étage de vitesse (g-1) qui suit en rétrogradant et de la valeur de la vitesse de rotation du moteur à attendre qui est déterminée au cours de l'étage de vitesse (g-1) qui suit en rétrogradant.

10. Procédé selon la revendication 9, caractérisé en ce que le facteur dépendant de l'étage de vitesse est déterminé par un second champ caractéristique de l'étage de vitesse (g-1) qui suit en rétrogradant.

11. Procédé selon l'une au moins des revendications 4 à 10, caractérisé en ce que la valeur limite de la vitesse de marche dépend au moins de l'étage de vitesse (g).

12. Procédé selon l'une au moins des revendications précédentes, caractérisé en ce qu'un changement de l'étage de vitesse (g) est évité et/ou l'un au moins des laps de temps (T1(SK(t)), T2(SK(t)), T3(SK(t))) est fixé à zéro dans la mesure où la valeur de l'accélération transversale dépasse une seconde limite de l'accélération transversale qui dépend de la vitesse de marche (v(t)), ou aussi longtemps qu'un cinquième laps de temps (T5(SK(t))) ne s'est pas encore écoulé, après être passé au-dessous de la seconde limite de l'accélération transversale.

13. Procédé selon l'une au moins des revendications précédentes, caractérisé en ce que des rétrogradations sont évitées et/ou l'un au moins des laps de temps (T1(SK(t)), T2(SK(t)), T3(SK(t)) ou T5(SK(t))) est fixé à zéro, dans la mesure où un patinage excessif apparaît sur au moins l'une des roues du véhicule ou si l'adhérence entre au moins une roue du véhicule et la chaussée sur laquelle il circule est interrompue.

14. Procédé selon l'une au moins des revendications 1 à 12, caractérisé en ce qu'une rétrogradation n'est admise que lorsque la vitesse différentielle entre une vitesse d'un essieu non entraîné et la vitesse de marche (v(t)) détectée sur un essieu entraîné ne dépasse pas une valeur de vitesse différentielle admissible.

15. Procédé selon la revendication 14, caractérisé en ce que lorsqu'il y a dépassement de la valeur de la vitesse différentielle admissible:
- un accouplement de pontage de convertisseur d'une boîte de vitesses équipée d'un convertisseur de couple de rotation est ouvert,
- une durée d'attente (Th(SK(t))) est fixée, pendant laquelle le passage à la vitesse supérieure ne peut pas être empêché,
- l'étage de vitesse (g) engagé est augmenté de un, et
- des rétrogradations sont rendues imposssibles,
ces fonctions étant à nouveau remises à leur état initial quand le fonctionnement en traction est détecté et quand la modification dans le temps de la vitesse de marche présente des valeurs positives.

16. Procédé selon l'une au moins des revendications précédentes, caractérisé en ce qu'au moins l'un des laps de temps (T1(SK(t)), T2(SK(t)), T3(SK(t)), T4(SK(t)), T5(SK(t)), (Th(SK(t))) ou au moins la valeur limite de la vitesse de marche ou le facteur qui dépend de l'étage de vitesse ou encore la valeur de la vitesse différentielle admissible peut ou peuvent être réglés de façon arbitraire et de préférence en même temps qu'un réglage du champ caractéristique de changement de vitesse (SKFj) (programme de marche optimisé sur la consommation, champ caractéristique de changement de vitesse SKF1; programme de marche optimisé sur la puissance, champ caractéristique de changement de vitesse SKF5), de manière que lorsqu'il s'agit de programmes de marche plus optimisés sur la puissance, les laps de temps (T1(SK(t)), T2(SK(t)), T3(SK(t)), T5(SK(t))) et la valeur limite de la vitesse de marche augmentent, et les laps de temps (T4(SK(t)), (Th(SK(t))), le facteur dépendant de l'étage de vitesse et la valeur de la vitesse différentielle admissible diminuent.

17. Dispositif selon l'une au moins des revendications précédentes, caractérisé en ce qu'au moins l'un des laps de temps (T1(SK(t)), T2(SK(t)), T3(SK(t)), T4(SK(t)), T5(SK(t)), (Th(SK(t))) ou au moins la valeur limite de la vitesse de marche ou le facteur dépendant de l'étage de vitesse ou la valeur de la vitesse différentielle admissible dépendent soit d'une activité de conduite déterminant à long terme le style de conduite du conducteur, soit de sa conduite déterminée par la situation du trafic par rapport à la direction du véhicule, et dans le cas d'une activité de conduite croissante et plus orientée sur la puissance, les laps de temps (T1(SK(t)), T2(SK(t)), T3(SK(t)), T5(SK(t))) et la valeur limite de la vitesse de marche augmentent, et les laps de temps (T4(SK(t)), (Th(SK(t))), le facteur qui dépend de l'étage de vitesse et la valeur de la vitesse différentielle admissible diminuent.

18. Procédé selon la revendication 17, caractérisé en ce que l'activité de conduite est déterminée par une relation fonctionnelle déterminant à plus long terme le style de conduite du conducteur ou sa conduite déterminée par la situation du trafic par rapport à la direction du véhicule automobile (formation d'une valeur moyenne flottante) à partir de valeurs actuelles et passées d'une unique grandeur caractéristique de fonctionnement ou d'une grandeur provenant de l'assemblage en une unique grandeur de plusieurs grandeurs caractéristiques de fonctionnement d'un véhicule automobile.
